# EUROPÄISCHE PATENTANMELDUNG

(11) **EP 3 653 872 A1**
(43) Veröffentlichungstag der Anmeldung: **20.05.2020**
(21) Anmeldenummer: 18206940.1
(22) Anmeldetag: 19.11.2018
(51) Int. Cl.: F03D 1/06

(54) **VERFAHREN ZUM HERSTELLEN ZWEIER ROTORBLATTSEGMENTE, ROTORBLATTSEGMENT SOWIE GETEILTES ROTORBLATT**

(71) Anmelder: Nordex Energy GmbH, 22419 Hamburg (DE)
(72) Erfinder: Rauter, Natalie, 21031 Hamburg (DE)
(74) Vertreter: Epping - Hermann - Fischer

(57) **Zusammenfassung**

Die Erfindung betrifft ein Verfahren zum Herstellen zweier Rotorblattsegmente (132, 134) eines geteilten Rotorblatts (110). Das Verfahren hat folgende Schritte:
- Fertigen eines Rotorblatts (110), welches bezüglich einer Längsachse (120) des Rotorblatts (110) eine vorbestimmte Teilungsstelle (130) aufweist, wobei im Bereich der vorbestimmten Teilungsstelle (130) eine Vielzahl von Lagerhülsen (148) angeordnet sind, und
- Durchtrennen des Rotorblatts (110) an der Teilungsstelle (130) derart, dass zwei Rotorblattsegmente (132, 134) mit zueinander korrespondierenden Teilungsflanschen (154) gebildet sind, wobei die Lagerhülsen (148) ebenfalls durchtrennt werden.

Die Erfindung betrifft auch ein Rotorblattsegment (132, 134) sowie ein geteiltes Rotorblatt (110).

## Beschreibung

Die Erfindung betrifft ein Verfahren zum Herstellen zweier Rotorblattsegmente eines geteilten Rotorblatts. Die Erfindung betrifft darüber hinaus ein Rotorblattsegment und ein geteiltes Rotorblatt mit zumindest zwei Rotorblattsegmenten.

Windenergieanlagen mit Windenergieanlagenrotorblättern sind aus dem Stand der Technik vielfach bekannt und werden verwendet, um Windenergie in elektrische Energie umzuwandeln. Windenergieanlagen weisen eine Vielzahl von Bauteilen auf, die mittels einer Flanschverbindung verbunden werden. Zum Beispiel im Bereich einer Rotorblattwurzel weisen die Rotorblätter einen Rotorblattanschluss mit einer Vielzahl von in das Laminat integrierten Lagerhülsen auf, über welche die Rotorblätter mittels Befestigungsschrauben bzw. Befestigungsschraubbolzen mit einem Lagerring eines sogenannten Pitchlagers oder mit einem mit dem Lagerring verbundenen Bauteil wie z.B. einem sogenannten Extender der Windenergieanlage verbunden werden. Die Lagerhülsen können Teil eines Flanscheinlegers für den Rotorblattanschluss sein. Ein derartiger Aufbau ist beispielsweise aus der internationalen Anmeldung WO 2015/124568 A1 bekannt.

Alternativ finden Flanschverbindungen auch bei der Verbindung von Rotorblattsegmenten Verwendung, die, der Länge nach angeordnet und zusammengefügt, ein Rotorblatt bilden. Ein solches Rotorblatt wird als (der Länge nach) geteiltes oder segmentiertes Rotorblatt bezeichnet. Beispielsweise befinden sich Lagerhülsen dann im Laminat eines Teilungsflansches der Rotorblattsegmente. Die Rotorblattsegmente werden mittels Schraubbolzen direkt oder über geeignete Zwischenstücke miteinander verbunden. Geteilte Rotorblätter sind insbesondere aus Transportgründen zu bevorzugen und gewinnen vor allem aufgrund der steigenden Gesamtlänge von Rotorblättern zunehmend an Bedeutung.

Eine Aufgabe, die der Erfindung zugrunde liegt, ist es, ein Konzept für geteilte Rotorblätter anzugeben, welches eine mechanisch präzise und verlässliche Verbindung der einzelnen Rotorblattsegmente gewährleistet.

Gemäß einem ersten Aspekt wird ein Verfahren zum Herstellen zweier Rotorblattsegmente eines geteilten Rotorblatts, die ausgebildet sind, miteinander mechanisch verbunden zu werden, offenbart. Das Verfahren umfasst folgende Schritte:
- Fertigen eines Rotorblatts, welches bezüglich einer Längsachse des Rotorblatts eine vorbestimmte Teilungsstelle aufweist, wobei im Bereich der Teilungsstelle eine Vielzahl von Lagerhülsen angeordnet sind, die sich entlang der Längsachse des Rotorblatts erstrecken, und
- Durchtrennen des Rotorblatts an der Teilungsstelle derart, dass zwei Rotorblattsegmente mit zueinander korrespondierenden Teilungsflanschen gebildet sind, wobei die Lagerhülsen so durchtrennt werden, dass ein erstes Rotorblattsegment am jeweiligen Teilungsflansch erste Lagerhülsenteilstücke der durchtrennten Lagerhülsen und ein zweites Rotorblattsegment am jeweiligen Teilungsflansch zweite Lagerhülsenteilstücke der durchtrennten Lagerhülsen aufweist.

Das erfindungsgemäße Verfahren sieht vor, dass das gefertigte Rotorblatt und die darin befindlichen Lagerhülsen gleichzeitig, d.h. in einem Arbeitsschritt, vollständig durchtrennt werden. Dies geschieht beispielsweise in einem Ablängvorgang mittels einer Bandsäge. Dadurch wird unter anderem erreicht, dass die in den Rotorblattsegmenten verbliebenen Teilstücke der durchteilten Lagerhülsen besonders gut zueinander korrespondieren, d.h. ausgerichtet sind. Insbesondere für das spätere mechanische Verbinden der Segmente sind sämtliche Lagerhülsen besonders gut fluchtend zueinander angeordnet. Weiterhin wird ermöglicht, dass sich die Trennflächen an Saug- und Druckseite eines Segments an derselben Position, insb. derselben Längenposition (bzgl. der Längsachse) befinden. Durch das beschriebene Durchtrennen ist pro Segment eine Trennfläche ausgebildet. Darüber hinaus korrespondieren die Trennflächen beider entstandener Rotorblattsegmente besonders gut zueinander. Mit anderen Worten sind die Trennebenen beider Segmente und damit von Druck- und Saugseite im Wesentlichen identisch. Dadurch können die beiden Segmente später besonders gut aneinander montiert werden.

Ein weiterer Vorteil liegt darin, dass durch die nachträgliche Durchtrennung der einlaminierten Lagerhülsen keine Abdichtung der Lagerhülsen bei der Fertigung des Rotorblatts nötig ist, insb. nicht im Bereich der Trennstelle. Harz oder andere Materialien können nicht in das Innere der Lagerhülsen eindringen, da die Trennung erst nach dem Aushärten des Laminats erfolgt. Lediglich die von der Teilungsstelle abgewandten Enden der Lagerhülsen müssen - je nach Ausbildung der Enden der Lagerhülsen - gegebenenfalls abgedichtet sein.

Es wurde erkannt, dass bei bisherigen Konzepten, bei denen bereits getrennte, einzelne Hülsen in den einzelnen Segmenten auf Druck- und Saugseite eingebracht werden, der Fertigungsprozess sehr toleranzbehaftet ist. Um eine spätere Verschraubung der beiden Segmente bei solchen Konzepten sicher zu gewährleisten, müssten die möglichen Toleranzen besonders gering gehalten werden. Dies würde sowohl die Orientierung der Hülsen in Blattlängsrichtung, als auch die Position der Trennflächen an Druck- und Saugseite betreffen. Dies ist jedoch mit hohen Kosten verbunden. Zudem ist eine besonders gute Abstimmung der beiden Segmente zueinander aus fertigungstechnischen Gründen oft nicht möglich.

Würde man miteinander verschraubte Hülsen in die Schalenform zur Fertigung des Rotorblatts bzw. der Segmente legen, könnten zwar die Hülsen in den Segmenten zueinander ausgerichtet werden, die Trennstellen an Druck- und Saugseite sind aber bereits vorgegeben.

Diese Nachteile werden durch die nachträgliche Durchtrennung der Lagerhülsen in zwei Teile oder Hälften, die in den entstandenen Rotorblattsegmenten verbleiben, vermieden.

Die vorbestimmte Teilungsstelle definiert die Stelle, an der im Schritt des Durchtrennens das gefertigte Rotorblatt durchteilt wird und die Rotorblattsegmente hergestellt werden. Die vorbestimmte Teilungsstelle muss nicht zwingend optisch oder physisch am gefertigten Rotorblatt erkennbar sein, sondern kann vor dem Durchtrennen eine gedachte Teilungsstelle definieren.

Im Bereich der Teilungsstelle sind die Lagerhülsen in Längsrichtung angeordnet, die sich über die Teilungsstelle hinweg erstrecken und somit in beiden herzustellenden Segmenten verlaufen. Die Lagerhülsen können auch als durchgängige Hülsen bezeichnet werden, da sie sich durchgängig von dem einem herzustellenden Segment in das andere herzustellende Segment erstrecken. Die Lagerhülsen weisen beispielsweise jeweils ein Innengewinde auf, so dass auch nach dem Durchtrennen die jeweils entstandenen Lagerhülsenteilstücke ein Innengewinde haben. Mittels diesem können die beiden Segmente zu einem späteren Zeitpunkt wieder zusammen geschraubt werden, beispielsweise direkt über die Schraubbolzen oder geeignete Zwischenstücke.

Im Schritt des Fertigens wird im Wesentlichen das gesamte Rotorblatt gefertigt, wobei dies die Hauptformgebung des Rotorblatts betrifft. Mit anderen Worten ist zumindest die Hauptstruktur, etwa der schalenartige Rotorblattkörper des Rotorblatts mit etwaigen Stegen oder Gurten im Inneren, gebildet. Der schalenartige Rotorblattkörper kann beispielsweise aus zwei miteinander verbundenen Halbschalen, die der Saug- bzw. Druckseite entsprechen, gebildet sein oder als eine Gesamtschale direkt in einer Form hergestellt werden. Der Schritt des Fertigens umfasst zumindest das Herstellen und Aushärten des Faserverbundaufbaus, d.h. den Aufbau der Laminatlagen, die Harz-Infusion, das Aushärten des Harzes und/oder andere Herstellungsschritte. Weitergehende Fertigungsschritte, etwa das Nachbearbeiten von Kanten, das Anbringen zusätzlicher Komponenten wie etwa von Heizelementen, etc., sind nicht zwingend vom Schritt des Fertigens umfasst.

Gemäß einer Ausführungsform sind die Lagerhülsen nach dem Schritt des Fertigens des Rotorblatts vollständig von faserverstärktem Material umgeben. Auch nach dem Durchtrennen sind die entstandenen Lagerhülsenteilstücke vollständig (mit Ausnahme der zur Trennstelle weisenden Stirnfläche der Lagerhülsen) von faserverstärktem Material umgeben. Dadurch wird eine besonders hohe Stabilität im Flanschbereich der Segmente erreicht.

Gemäß einer Ausführungsform sind die Lagerhülsen nach dem Schritt des Fertigens des Rotorblatts zumindest im Bereich der Teilungsstelle von Harz und nicht von faserverstärktem Material umgeben. Mit anderen Worten sind die Lagerhülsen im Bereich der Teilungsstelle frei von faserverstärktem Material. Dies bedeutet, dass die Lagerhülsen nicht unmittelbar von faserverstärktem Material umgeben sind, etwa aufgrund der Einbettung in ein Strukturbauteil. Durch die fehlenden Verstärkungsfasern kann die Teilungsstelle optisch identifiziert werden und das Durchtrennen des Rotorblatts wird vereinfacht.

Gemäß einer Ausführungsform sind die Lagerhülsen in einem oder mehreren Strukturbauteilen des Rotorblatts eingebettet. Insbesondere bei der Fertigung des Rotorblatts können die Lagerhülsen so einfach in die Fertigungsform eingelegt werden. Zudem wird durch ein Strukturbauteil eine höhere Stabilität der Teilungsflansche im Bereich der Lagerhülsen, insb. mit Hinblick auf im Betrieb einer Windenergieanlage auftretende Scherkräfte, ermöglicht. Das Strukturbauteil mit den eingebetteten Hülsen kann als Vorfertigungsbauteil ausgebildet sein.

Gemäß einer Ausführungsform erfolgt der Schritt des Durchtrennens nach einem Entformen des Rotorblatts aus einer Hauptform zur Fertigung des Rotorblatts. Erst nach dem Aushärten und Herstellen des aus Faserverbundwerkstoff aufgebauten Rotorblatts wird dieses durchtrennt.

Gemäß einer Ausführungsform werden im Schritt des Fertigens zwei Rotorblatthalbschalen gefertigt, die im Bereich der vorbestimmten Teilungsstelle einen Teil der Vielzahl von Lagerhülsen aufweisen und die anschließend zum Ausbilden des Rotorblatts in einer Hauptform miteinander verbunden werden. Die Rotorblatthalbschalen entsprechen beispielsweise einer Saug- bzw. Druckseite des fertigen Rotorblatts. Die Rotorblatthalbschalen werden beispielsweise in separaten Formen hergestellt, die nach der Fertigung der Halbschalen durch Klappen oder Schwenken übereinander angeordnet werden. Gemäß einer Ausführungsform werden nach dem Schritt des Durchtrennens die beiden Rotorblattsegmente im Bereich der zueinander korrespondierenden Teilungsflansche besäumt. Das Besäumen bedeutet hier und im Folgenden eine Nachbearbeitung des Rotorblatts, beispielsweise ein Schleifen, Entgraten oder dergleichen. Dabei werden die Teilungsflansche so bearbeitet, dass die beiden Segmente nachträglich im Feld wieder zusammengefügt und verbunden werden können.

Gemäß einem weiteren Aspekt wird ein Rotorblattsegment eines geteilten Rotorblattes offenbart, welches an einem Teilungsflansch Lagerhülsenteilstücke aufweist, die nach Durchtrennen eines ungeteilt gefertigten Rotorblatts und darin angeordneter Lagerhülsen entstanden sind.

Das Rotorblattsegment ermöglicht im Wesentlich die zuvor genannten Vorteile und Funktionen. Die zuvor beschriebenen Weiterbildungen gelten analog.

Gemäß einem weiteren Aspekt wird ein geteiltes Rotorblatt einer Windenergieanlage offenbart, welches zwei Rotorblattsegmente aufweist. Die beiden Rotorblattsegmente sind durch Durchtrennung eines ungeteilten Rotorblatts mit Lagerhülsen hergestellt. Das erste Rotorblattsegment weist erste Lagerhülsenteilstücke von durchtrennten Lagerhülsen auf. Das zweite Rotorblattsegment weist zu den ersten Lagerhülsenteilstücken korrespondierende zweite Lagerhülsenteilstücke der durchtrennten Lagerhülsen auf. Die beiden Rotorblattsegmente sind mittels der Lagerhülsenteilstücke direkt oder indirekt miteinander mechanisch verbunden.

Das geteilte Rotorblatt ermöglicht im Wesentlichen die zuvor genannten Vorteile und Funktionen. Die zuvor beschriebenen Weiterbildungen gelten analog.

Gemäß einer Ausführungsform sind die beiden Rotorblattsegmente über ein oder mehreren Zwischenstücke miteinander gekoppelt, welches bzw. welche jeweils mit den Lagerhülsenteilstücken der beiden Rotorblattsegmente verschraubt sind. Dadurch können die beiden Segmente einfach miteinander verbunden werden. Mit anderen Worten sind die Segmente nicht direkt, sondern mittelbar über das eine oder die mehreren Zwischenstücke verbunden.

Weitere Vorteile, Merkmale und Weiterbildungen ergeben sich aus den nachfolgenden, in Verbindung mit den Figuren erläuterten Ausführungsbeispielen. Gleiche, gleichartige oder gleich wirkende Elemente sind in den Figuren mit den gleichen Bezugszeichen versehen. Aus Gründen der Übersichtlichkeit sind gegebenenfalls nicht alle beschriebenen Elemente in sämtlichen Figuren mit zugehörigen Bezugszeichen gekennzeichnet.

In den Figuren zeigen:
Figur 1 eine schematische Darstellung einer Windenergieanlage,
Figur 2 eine schematische Darstellung eines geteilten Rotorblatts der Windenergieanlage,
Figur 3 eine schematische Querschnittsdarstellung eines Teilungsflansches des geteilten Rotorblattes,
Figur 4 zwei schematische Querschnittsansichten eines Rotorblattes gemäß einem Ausführungsbeispiel der Erfindung beim Fertigen dessen,
Figur 5 zwei schematische Querschnittsansichten des Rotorblattes gemäß dem Ausführungsbeispiel der Erfindung in geteilter Form, und
Figur 6 ein schematisches Ablaufdiagramm eines Verfahrens zum Herstellen des geteilten Rotorblattes gemäß einem Ausführungsbeispiel der Erfindung.

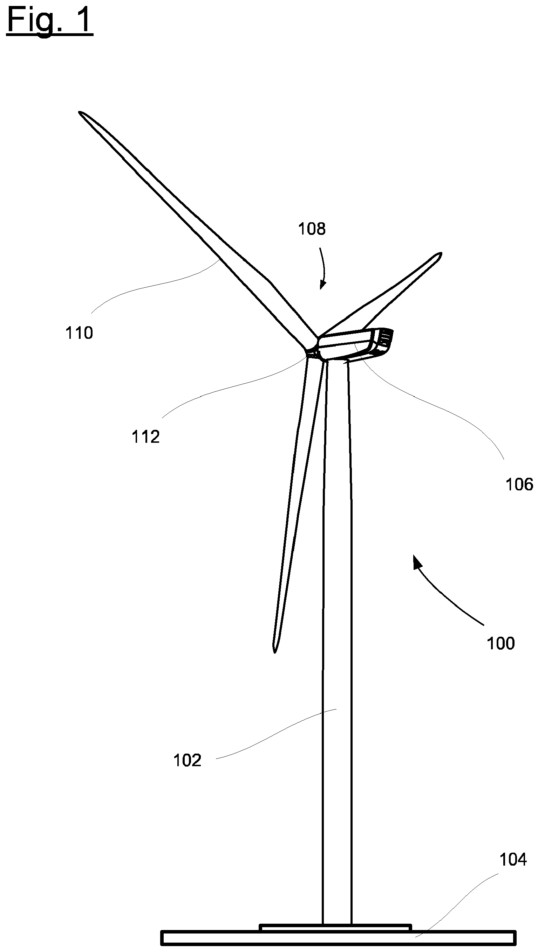

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

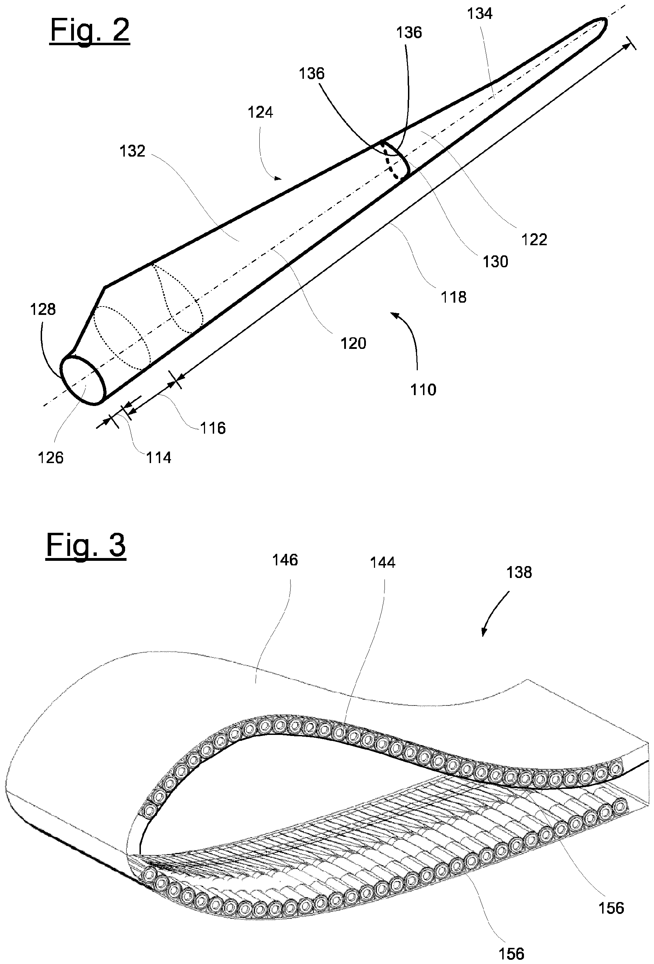

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat bezüglich einer Längserstreckungsrichtung 120 eine Druckseite 122 und eine gegenüberliegende Saugseite 124. Das Rotorblatt 110 ist im Inneren im Wesentlichen hohl ausgebildet.

Im Rotorblattwurzelbereich 114 ist ein Rotorblattanschluss 126 mit einem Flanschanschluss 128 vorgesehen, mittels welchem das Rotorblatt 110 mit einem Pitchlager oder einem Extender mechanisch verbunden wird.

Das Rotorblatt 110 weist eine Teilungsstelle 130 auf, an welcher ein blattwurzelseitiges Rotorblattsegment 132 und ein blattspitzenseitiges Rotorblattsegment 134 miteinander verbunden sind. Hierzu weisen beide Segmente 132, 134 jeweils einen Rotorblattsegmentanschluss 136 mit einem Teilungsflansch auf. Das Rotorblatt 110 ist somit ein geteiltes Rotorblatt wie eingangs beschrieben.

Ein Teilungsflansch 138 eines Rotorblattsegments 132, 134 ist beispielsweise in Figur 3 in einer schematischen Querschnittsansicht dargestellt. Der Teilungsflansch 138 weist eine Vielzahl von Lagerhülsen 140 auf, die kreisbogenartig angeordnet sind und Innengewinde für die Aufnahme von Schraubbolzen, auch Lagerbolzen genannt, aufweisen. Der Teilungsflansch ist beispielsweise als ein Flanscheinleger realisiert, welcher als Einlegeteil in eine Fertigungsform zur Herstellung des Rotorblattes 110 eingelegt wird. Der Aufbau umfasst beispielsweise eine innere Laminatlage 144 sowie eine äußere Laminatlage 146, die entsprechend dem Rotorblattprofil verlaufen und zwischen denen in Längserstreckungsrichtung 120 die Lagerhülsenteilstücke 156 angeordnet sind. Bei den Lagerhülsenteilstücken 156 handelt es sich beispielsweise um Stahlhülsen.

Es ist jedoch auch denkbar, dass kein Flanscheinleger vorgesehen ist und die Lagerhülsen direkt in die Rotorblatthalbschalen eingebettet und einlaminiert werden und nach dem Durchtrennen des Rotorblatts einen Teilungsflansch 138 bilden.

Mittels der Lagerhülsenteilstücke 156 in den beiden Teilungsflanschen 138 werden die beiden Segmente 132, 134 miteinander verschraubt, wobei eine möglichst passgenaue Ausrichtung der beiden Segmente 132, 134 und der Lagerhülsenteilstücke 156 zueinander benötigt wird.

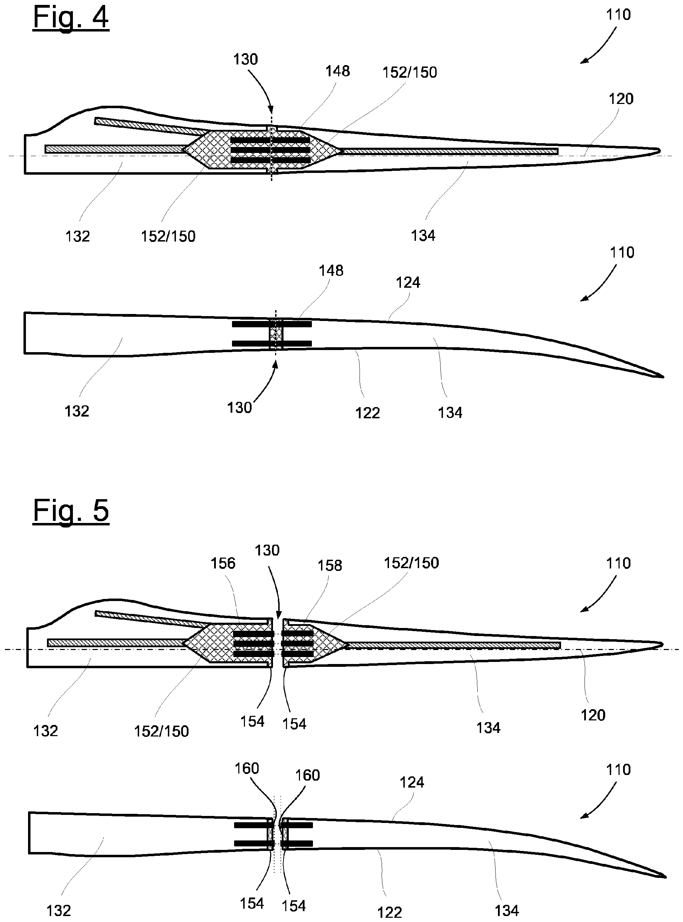

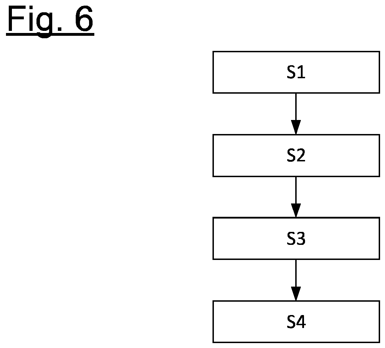

Im Folgenden wird die Herstellung eines geteilten Rotorblatts 110 gemäß einem Ausführungsbeispiel der Erfindung anhand der Figuren 4 bis 6 beschrieben. Dabei zeigen die Figuren 4 und 5 jeweils zwei schematische Querschnittsansichten durch die Längsachse 120 des Rotorblatts 110 zu verschiedenen Herstellungszuständen, während Figur 6 ein schematisches Ablaufdiagramm des Verfahrens darstellt. Das Rotorblatt 110 weist im Wesentlichen die zuvor beschriebenen strukturellen Merkmale auf, wobei andere Ausgestaltungen denkbar sind, solange das Prinzip der nachfolgenden Beschreibung gewährleistet ist.

In einem ersten Schritt S1 wird das Rotorblatt 110 gefertigt. Dies ist in Figur 4 schematisch angedeutet. Hierzu werden zunächst Rotorblatthalbschalen des Rotorblatts 110, die der Saug- bzw. Druckseite 122, 124 entsprechen, hergestellt, die anschließend miteinander verbunden werden (nicht im Detail dargestellt). Beispielsweise werden für die Fertigung der Halbschalen jeweils entsprechende Halbschalenformen verwendet, in die die entsprechenden Materialien und Komponenten, etwa Laminatlagen etc., eingelegt, mit Harz infundiert und ausgehärtet werden. Anschließend werden die beiden Halbschalenformen übereinander angeordnet, so dass die Halbschalen miteinander verbunden werden können. Das Rotorblatt 110 kann auch anderweitig gefertigt werden, etwa direkt in einer Hauptform. Die Fertigung ist dem Fachmann grundsätzlich bekannt und wird daher nicht näher erläutert.

Bei dem Rotorblatt 110 ist bezogen auf die Längsachse 120 eine vorbestimmte Teilungsstelle 130 für eine spätere Durchtrennung des Rotorblatts 110 vorgesehen, die das Rotorblatt 110 in das blattwurzelseitige Rotorblattsegment 132 und das blattspitzenseitige Rotorblattsegment 134 unterteilt.

Das Rotorblatt 110 weist durchgängige Lagerhülsen 148 auf, die sich entlang der Längsrichtung 120 von dem einen Segment 132 über die Teilungsstelle 130 hinweg in das andere Segment 134 erstrecken. Figur 4 zeigt die Positionierung der Lagerhülsen 148 in dem Rotorblatt 110 bzw. in dessen Halbschalen. Die untere Darstellung der Figur 4 zeigt, dass die Lagerhülsen 148 sowohl an der Saugseite 124 als auch an der Druckseite 122 entsprechend angeordnet sind. Die Lagerhülsen 148 werden bei der Fertigung des Blattes 110 in die entsprechenden Formen eingelegt. Die Lagerhülsen 148 weisen ein Innengewinde auf.

Die Lagerhülsen 148 sind von faserverstärktem Material 150 umgeben, welches Teil eines Strukturbauteils 152 ist. Das Strukturbauteil 152 mit den integrierten Lagerhülsen 148 kann als Vorfertigungsbauteil gefertigt und als solches in die Form eingelegt werden.

Es sei an dieser Stelle erwähnt, dass die Fertigung wie eingangs erwähnt zumindest die Herstellung des Schalenkörpers des Rotorblatts 110 umfasst. Unter diesem Schritt soll nicht zwingend die vollständige Fertigung des Blattes verstanden werden, worauf das Rotorblatt 110 ohne weitere Maßnahmen direkt im Feld verbaut werden könnte.

In einem nächsten Schritt S2 wird das fertige Rotorblatt 110 aus der Hauptform entformt.

In einem weiteren Schritt S3 wird das fertige Rotorblatt 110 an der Teilungsstelle 130 durchtrennt, wobei auch die Lagerhülsen 148 durchtrennt werden. Das Durchtrennen erfolgt beispielsweise in einem Sägevorgang. Dadurch entstehen die zwei Rotorblattsegmente 132 und 134, die jeweils zueinander korrespondierende Teilungsflansche 154 aufweisen. Durch die Durchtrennung der Lagerhülsen 148 sind jeweils einander zugehörige erste und zweite Lagerhülsenteilstücke 156, 158 gebildet, wobei das erste (blattwurzelseitige) Rotorblattsegment 132 am entsprechenden Teilungsflansch 154 die ersten Lagerhülsenteilstücke 156 und das zweite (blattspitzenseitige) Rotorblattsegment 134 die zweiten Lagerhülsenteilstücke 158 aufweist. Die Lagerhülsenteilstücke 156, 158 sind an den zueinander korrespondieren Teilungsflanschen 154 offen und weisen jeweils ein Innengewinde auf, so dass die beiden Rotorblattsegmente 132, 134 zu einem späteren Zeitpunkt wieder miteinander zu dem Rotorblatt 110 verbunden werden können, insbesondere mittels einer Schraubverbindung.

Die ersten Lagerhülsenteilstücke 156 können auch als blattwurzelseitige Hülsen und die zweiten Lagerhülsenteilstücke 158 als blattspitzenseitige Hülsen bezeichnet werden.

In einem weiteren Schritt S4 werden die beiden entstandenen Rotorblattsegmente 132 und 134 im Bereich der Segmentanschlüsse 154 besäumt.

Durch die Durchtrennung des Rotorblatts 110 an der Teilungsstelle 130 wird erreicht, dass die Teilungsflansche 154 besonders passgenau zueinander ausgerichtet sind. So sind zum einen die Lagerhülsenteilstücke 156, 158 in beiden Segmenten 132, 134 zueinander fluchtend ausgerichtet (siehe waagerechte Strichlinien in der oberen und unteren Abbildung der Figur 5). Zum anderen ist zusätzlich gewährleistet, dass sich auch die Teilungsstelle 130 an Druck- und Saugseite 122, 124 an derselben Position befindet. Mit anderen Worten weisen die beiden Segmente 132, 134 nach der Trennung zueinander passgenau ausgerichtete Trennflächen 160 auf (siehe senkrechte Strichlinien in der unteren Abbildung der Figur 5).

Es sei an dieser Stelle erwähnt, dass die obigen Ausführungen auch für ein geteiltes Rotorblatt mit zwei oder mehr Teilungsstellen 130 gleichermaßen gelten. In diesem Fall würde das geteilte Rotorblatt drei oder mehr Rotorblattsegmente aufweisen.

### BEZUGSZEICHENLISTE

- 100: Windenergieanlage
- 102: Turm
- 104: Fundament
- 106: Gondel
- 108: Rotor
- 110: Rotorblatt
- 112: Rotornabe
- 114: Rotorblattwurzelbereich
- 116: Übergangsbereich
- 118: Profilbereich
- 120: Längserstreckungsrichtung
- 122: Druckseite
- 124: Saugseite
- 126: Rotorblattanschluss
- 128: Flanschanschluss
- 130: Teilungsstelle
- 132: erstes (blattwurzelseitiges) Rotorblattsegment
- 134: zweites (blattspitzenseitiges) Rotorblattsegment
- 136: Segmentanschluss
- 138: Teilungsflansch
- 140: Lagerhülse
- 144: innere Laminatlage
- 146: äußere Laminatlage
- 148: Lagerhülsen
- 150: faserverstärktes Material
- 152: Strukturbauteil
- 153: Harz
- 154: Teilungsflansch
- 156: erste Lagerhülsenteilstücke
- 158: zweite Lagerhülsenteilstücke
- 160: Trennfläche
- S1 bis S4: Schritte

## Patentansprüche

1. Verfahren zum Herstellen zweier Rotorblattsegmente (132, 134) eines geteilten Rotorblatts (110) einer Windenergieanlage (100), die ausgebildet sind, miteinander mechanisch verbunden zu werden, wobei das Verfahren folgende Schritte aufweist:
- Fertigen eines Rotorblatts (110), welches bezüglich einer Längsachse (120) des Rotorblatts (110) eine vorbestimmte Teilungsstelle (130) aufweist, wobei im Bereich der vorbestimmten Teilungsstelle (130) eine Vielzahl von Lagerhülsen (148) angeordnet sind, die sich entlang der Längsachse (120) des Rotorblatts (110) erstrecken, und
- Durchtrennen des Rotorblatts (110) an der Teilungsstelle (130) derart, dass zwei Rotorblattsegmente (132, 134) mit zueinander korrespondierenden Teilungsflanschen (154) gebildet sind, wobei die Lagerhülsen (148) so durchtrennt werden, dass ein erstes Rotorblattsegment (132) am jeweiligen Teilungsflansch (154) erste Lagerhülsenteilstücke (156) der durchtrennten Lagerhülsen (148) und ein zweites Rotorblattsegment (134) am jeweiligen Teilungsflansch (154) zweite Lagerhülsenteilstücke (158) der durchtrennten Lagerhülsen (148) aufweist.

2. Verfahren nach Anspruch 1, wobei die Lagerhülsen (148) nach dem Schritt des Fertigens vollständig von faserverstärktem Material (150) umgeben sind.

3. Verfahren nach Anspruch 1, wobei die Lagerhülsen (148) nach dem Schritt des Fertigens zumindest im Bereich der Teilungsstelle (130) von Harz (153) und nicht von faserverstärktem Material (150) umgeben sind.

4. Verfahren nach einem der vorhergehenden Ansprüche, wobei die Lagerhülsen (148) in einem oder mehreren Strukturbauteilen (152) des Rotorblatts (110) eingebettet sind.

5. Verfahren nach einem der vorhergehenden Ansprüche, wobei der Schritt des Durchtrennens nach einem Entformen des Rotorblatts (110) aus einer Hauptform erfolgt.

6. Verfahren nach einem der vorhergehenden Ansprüche, wobei im Schritt des Fertigens zwei Rotorblatthalbschalen gefertigt werden, die im Bereich der vorbestimmten Teilungsstelle (130) jeweils einen Teil der Vielzahl von Lagerhülsen (148) aufweisen und die anschließend zum Ausbilden des Rotorblatts (110) in einer Hauptform miteinander verbunden werden.

7. Verfahren nach einem der vorhergehenden Ansprüche, wobei nach dem Schritt des Durchtrennens die beiden Rotorblattsegmente (132, 134) im Bereich der zueinander korrespondierenden Teilungsflansche (154) besäumt werden.

8. Rotorblattsegment (132, 134) eines geteilten Rotorblattes (110), welches an einem Teilungsflansch (154) Lagerhülsenteilstücke (156, 158) aufweist, die nach Durchtrennen eines ungeteilt gefertigten Rotorblatts (110) mit darin angeordneten Lagerhülsen (148) entstanden sind.

9. Geteiltes Rotorblatt (110) einer Windenergieanlage, welches zwei Rotorblattsegmente (132, 134) aufweist, wobei
- beide Rotorblattsegmente (132, 134) durch Durchtrennung eines ungeteilten Rotorblatts (110) mit Lagerhülsen (148) hergestellt sind,
- eine erstes Rotorblattsegment (132) erste Lagerhülsenteilstücke (156) von durchtrennten Lagerhülsen (148) und ein zweites Rotorblattsegment (134) zu den ersten Lagerhülsenteilstücken (156) korrespondierende zweite Lagerhülsenteilstücke (158) der durchtrennten Lagerhülsen (148) aufweist, und
- die beiden Rotorblattsegmente (132, 134) mittels der Lagerhülsenteilstücke (156, 158) direkt oder indirekt miteinander mechanisch verbunden sind.

10. Geteiltes Rotorblatt (110) nach Anspruch 9, wobei die beiden Rotorblattsegmente (132, 134) über ein Zwischenstück miteinander gekoppelt sind, welches jeweils mit den Lagerhülsenteilstücken (156, 158) der beiden Rotorblattsegmente (132, 134) verschraubt ist.
